Europäisches Patentamt

European Patent Office

Office européen des brevets

(19)

(11) Numéro de publication : **0 077 226 B1**

(12) FASCICULE DE BREVET EUROPÉEN

(45) Date de publication du fascicule du brevet :
17.07.85

(51) Int. Cl.⁴ : **B 23 D 77/08, B 27 G 17/04**

(21) Numéro de dépôt : **82401672.9**

(22) Date de dépôt : **14.09.82**

(54) Outil à main pour l'enlèvement de matière sur une pièce, notamment pour l'ébavurage ou le cassage d'angles.

(30) Priorité : 22.09.81 FR 8117863

(43) Date de publication de la demande :
20.04.83 Bulletin 83/16

(45) Mention de la délivrance du brevet :
17.07.85 Bulletin 85/29

(84) Etats contractants désignés :
AT BE CH DE GB IT LI LU NL SE

(56) Documents cités :
CH-A- 314 720
DE-C- 179 435
FR-A- 649 945
FR-A- 1 347 439
FR-E- 84 826
US-A- 1 687 403

(73) Titulaire : Carossino, André
88, Route de La Princesse
F-78430 Louveciennes (FR)

(72) Inventeur : Carossino, André
88, Route de La Princesse
F-78430 Louveciennes (FR)

(74) Mandataire : Rodhain, Claude
Cabinet Claude RODHAIN 30, rue La Boétie
F-75008 Paris (FR)

Jouve, 16, rue St-Denis, 75001 Paris, France

**Description**

La présente invention concerne les outils à main pour l'enlèvement de matière sur une pièce, du type comprenant un support d'outil solidaire à une extrémité d'un manche de manœuvre et portant à l'autre extrémité un outil proprement dit offrant une arête de coupe.

On connaît déjà des outils de ce type, utilisés plus particulièrement pour l'ébavurage ou le cassage d'angles (réalisation d'un chanfrein) sur des pièces, métalliques ou plastiques, et connus sous le nom de grattoirs ou ébavureurs, et dans lesquels l'outil proprement dit présente une forme de levier contre-coudé (en « jambe de chien ») dont un segment extrême est engagé axialement dans le support et est maintenu libre en rotation, tandis que l'arête de coupe est réalisée tout le long du segment intermédiaire et de l'autre segment extrême, de sorte qu'elle se trouve dans un plan parallèle à l'axe du support et du manche ou passant par celui-ci. Dans le cas de cassage d'une arête, cet outil peut être utilisé indifféremment sur une arête rectiligne ou sur une arête concave (par exemple, intersection d'un alésage cylindrique ou d'un passage polygonal avec la face d'une pièce). A cet effet, on oriente le manche de l'outil transversalement par rapport à l'arête et on pose sur celle-ci le levier de coupe qui vient, du fait de son montage libre en rotation, s'appliquer sur l'arête en équilibrant de lui-même sa plongée dans la matière dès que l'on déplace l'ensemble le long de l'arête, réalisant ainsi à volonté un fin copeau.

Ces outils présentent toutefois deux graves inconvénients. Tout d'abord, sur des arêtes rectilignes, il est impossible de commencer à enlever de la matière dès le début de l'arête, car l'outil de coupe ne peut pas prendre d'appui convenable et s'auto-positionner pour pénétrer dans la matière. Par ailleurs, sur des arêtes convexes curvilignes il est absolument impossible d'attaquer l'enlèvement de matière en quelque point que ce soit, car l'outil de coupe, qui est fou dans les deux sens, plonge immédiatement et fuit l'arête.

On connaît également un outil à creuser des gorges dans du bois, décrit par US-A-1.687.403 qui comporte deux lames de coupe parallèles et un ciseau disposé en face de l'intervalle entre les deux lames de coupe.

Dans cet outil, qui ne peut travailler qu'en poussée, le ciseau tend à s'enfoncer trop profondément dans la matière, cet enfoncement n'étant limité que par un léger guide de profondeur réglable par des moyens trop faibles pour résister à la forte poussée nécessaire pour effectuer le travail.

On connaît par ailleurs du brevet français 1.347.439 un appareil à chanfreiner comportant une pièce d'appui délimitant une rainure de section en V entre les branches de laquelle dépasse un ciseau.

Cet outil ne peut travailler qu'en poussée et le ciseau doit être démonté afin de pouvoir régler la profondeur de la taille effectuée.

C'est pourquoi la présente invention a pour but de supprimer ces inconvénients et de fournir un outil d'enlèvement de matière du type précité, que l'on puisse utiliser dès le début de l'arête dans le cas d'arêtes rectilignes, qui puisse, par ailleurs, également être utilisé sur des arêtes convexes curvilignes, et dont la profondeur de coupe ne nécessite aucun démontage.

A cet effet, l'invention a pour objet un outil à main du type précité, comprenant un support d'outil solidaire à une extrémité d'un manche de manœuvre et portant à l'autre extrémité un outil proprement dit offrant une arête de coupe, l'outil de coupe proprement dit étant fixé, par des moyens d'immobilisation, sur le support de manière que son arête de coupe ou taillant soit sensiblement perpendiculaire à la direction générale du support et du manche qui le prolonge, et une pièce de guidage et de butée présentant une rainure de guidage de section en V, caractérisé en ce que ce support porte en outre, à proximité de l'outil de coupe, la pièce de guidage et de butée de forme parallélépipédique qui est destiné à reposer sur l'arête de la pièce ayant un côté disposé face à la face de coupe de l'outil et son côté opposé éloigné de ladite face constituant un point d'appui sur cette pièce, la ligne fictive joignant le tranchant et ce point d'appui étant inclinée par rapport à la direction générale du support et du manche d'un angle α de l'ordre de 8 à 16°.

Grâce à cette disposition, non seulement on résout les deux inconvénients précités, mais encore d'une part, on limite, par le point de butée rapproché du taillant, la plongée de ce taillant de l'outil dans la matière afin d'éviter un phénomène de crochetage, tout en obtenant une régularité dans l'épaisseur de matière enlevée, et d'autre part, par l'inclinaison du manche, on assure un meilleur rendement de l'effort de traction ou de poussée de l'opérateur sur l'outil.

Suivant une caractéristique avantageuse, l'angle de dépouille de l'outil de coupe proprement dit est de l'ordre de 20 à 30° et de préférence d'environ 25° et l'angle de dégagement de 15 à 25° et de préférence d'environ 20°, ce qui confère au taillant de l'outil une plus grande agressivité vis-à-vis de la matière, c'est-à-dire favorise son engagement dans celle-ci grâce à la diminution de l'effort de coupe qui en résulte.

De façon particulièrement avantageuse, l'angle formé, d'une part, par la ligne fictive joignant le tranchant et le point de butée de l'outil et, d'autre part, la direction générale du support et du manche, est de l'ordre de 8 à 16° et de préférence 12° environ.

Avantageusement également, le rapport entre la distance comprise entre le taillant de l'outil et le point de butée et celle comprise entre ce point de butée et l'extrémité du manche est de l'ordre de 10 à 20 et de préférence de 12 à 15 environ.

Suivant une caractéristique importante de l'invention, le point de butée de l'organe d'appui est situé sur une zone de guidage allongée par rapport à laquelle fait saillie le taillant de l'outil.

De préférence, l'organe d'appui est rapporté sur le bloc support de manière interchangeable.

D'autres caractéristiques et avantages de l'invention ressortiront de la description qui va suivre, à titre d'exemples non limitatifs, et en regard des dessins annexés sur lesquels :

la Figure 1 représente une vue complète d'un outil suivant un premier mode de réalisation conforme à l'invention, cet outil étant posé sur une arête d'une pièce, la vue étant prise transversalement par rapport à cette pièce,

la Figure 2 représente une vue à plus grande échelle du support et de l'outil de coupe de la Fig. 1,

la Figure 3 représente une vue en coupe de la Fig. 2 prise suivant la ligne 3-3 de cette figure, les Figures 4, 5 et 6 illustrent l'utilisation d'un tel outil en plusieurs passes,

la Figure 7 représente une vue analogue à celle de la Fig. 2 pour un second mode de réalisation conforme à l'invention.

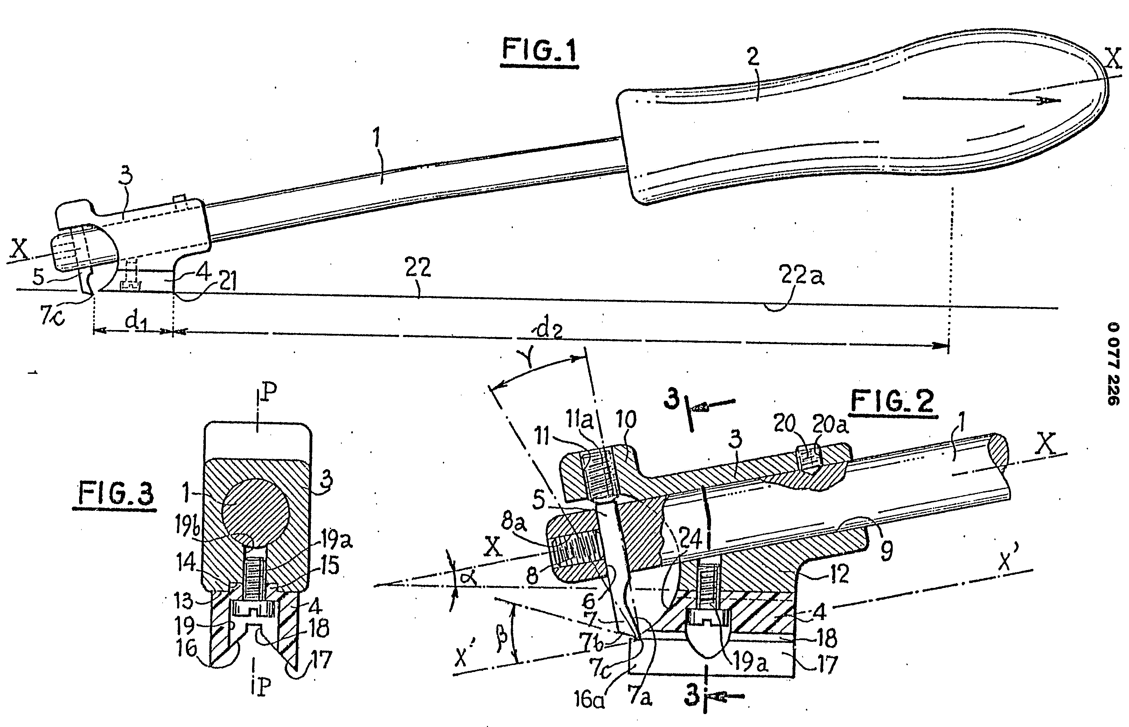

Comme le montre la Fig. 1, l'outil est constitué par une tige métallique cylindrique de grande longueur 1, qui est insérée à une extrémité et sur presque la moitié de sa longueur dans un manche 2 galbé de manière à assurer la meilleure préhension possible.

A son extrémité opposée, cette tige est ajustée dans un alésage ménagé dans un bloc de guidage 3 en matière plastique sur lequel sont fixés, d'une part, une pièce de guidage et de butée 4 et, d'autre part, un outil de coupe proprement dit 5.

Comme le montrent précisément les Fig. 2 et 3, l'organe de coupe 5 est constitué par un doigt cylindrique en acier spécial qui traverse un alésage 6 ménagé à l'extrémité de la tige 1 suivant un diamètre de celle-ci et qui offre, en dehors de cette tige, une tête de coupe 7 délimitée par une face de coupe 7a et une face de dépouille 7b qui se recoupent suivant une arête de coupe ou taillant 7c. Ce taillant 7c est orienté perpendiculairement à l'axe X-X de la tige 1 et la face de coupe 7a est tournée vers le manche 2. Une vis de serrage ou vis pointeau 8 est vissée dans un filetage borgne 8a ménagé dans l'extrémité de la tige 1 suivant son axe, de manière à pouvoir venir s'appuyer sur le doigt de coupe 5 et immobiliser ce dernier en position.

L'ajustement du bloc 3 sur la tige 1 est effectué par un alésage 9 de ce bloc. Celui-ci est positionné sur la tige du côté du manche 2 par rapport au doigt de coupe 5, mais à proximité de ce dernier, et il présente deux parties en saillie 10 et 11. La saillie 10 s'étend vers l'extrémité de la tige et au-dessus du doigt 5, à l'opposé de sa tête de coupe 7, de manière à présenter un filetage 11 coaxial à l'alésage 6 et dans lequel est engagée une vis de réglage 11a dont la tête s'appuie sur l'extrémité du doigt de coupe 5, de manière à permettre le réglage de la distance suivant laquelle ce doigt de coupe fait saillie par rapport à la tige 1 et au support 3. La seconde partie en saillie 12 de ce support 3 est dirigée du même côté que la tête de coupe 7 et présente une face de fixation 13 qui fait avec la direction de l'axe X-X, un angle α de l'ordre de 12°.

Sur cette face 13 est ménagée une gorge 14 qui permet l'emboîtement d'une nervure 15 offerte par la pièce de guidage et butée 4. Cette pièce est une pièce rapportée et amovible de forme parallélépipédique, mais dont la face opposée à la nervure 15 présente une cavité en retrait de forme prismatique 16 dont chacune des deux faces transversales 17 fait un angle de 45° par rapport au plan P-P de symétrie de l'ensemble qui est le plan passant par l'axe X-X et celui du doigt de coupe 5. Au fond de cette cavité prismatique 16 se trouve réalisée une rainure 18. Enfin, un trou borgne 19 est ménagé dans cette pièce perpendiculairement à la rainure 18 et au milieu de la longueur de la pièce, de manière à permettre le passage de la tête d'une vis 19a qui traverse la nervure 15 et vient se visser dans un filetage 19b ménagé dans la partie en saillie 12 du bloc 3. L'alésage 19 est plus large que la rainure 18 et sa profondeur est suffisante pour que la tête de la vis 19a soit en retrait par rapport à cette rainure 18. Il est enfin prévu une vis de serrage ou vis pointeau 20 qui est engagée dans un filetage 20a réalisé à l'arrière du bloc 3 radialement par rapport à la tige 1, de manière que cette vis 20 assure l'immobilisation du bloc sur la tige.

Comme le montre plus précisément la Fig. 2, la tête 7 du doigt de coupe 5 présente un angle de dépouille β de 14° et un angle de dégagement γ complément de l'angle de coupe de 25°. Par ailleurs, comme le montre la Fig. 1, si l'on appelle d1 la distance entre le tranchant 7c et la ligne transversale arrière 21 qui joint les points extrêmes (situés du côté du manche 2) des arêtes extérieures de la cavité prismatique 16 et si l'on appelle d2 la distance entre cette ligne 21 et la partie arrière du manche 2, le rapport entre ces distances d2 et d1 est 10.

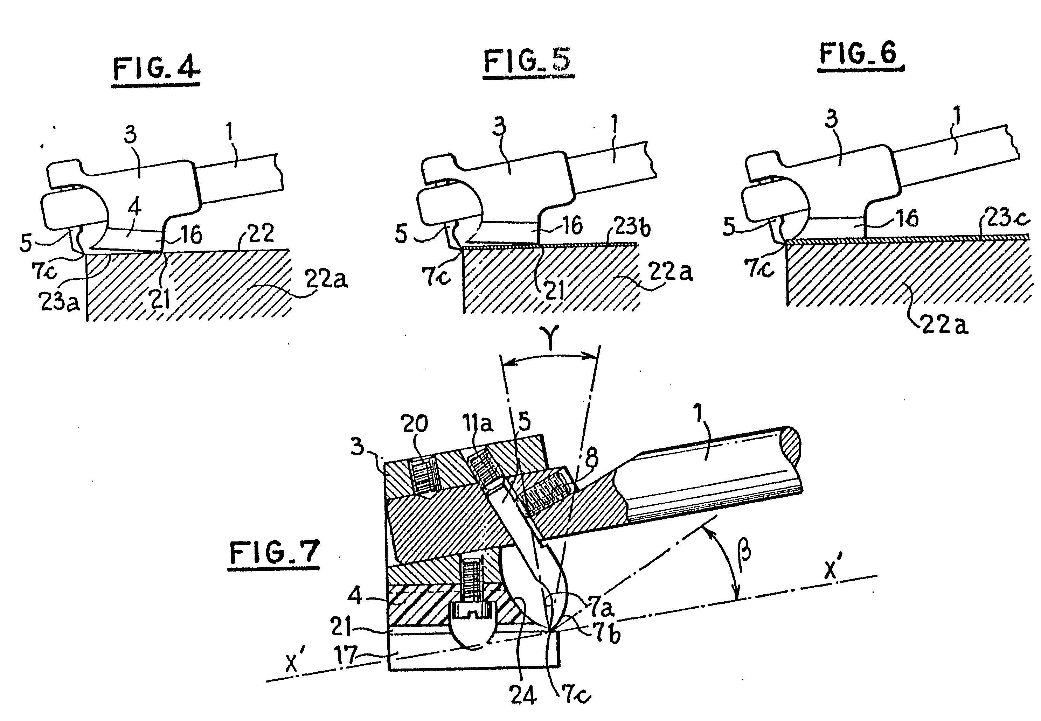

L'outil ainsi décrit permet de procéder à un enlèvement de métal, sur une arête 22 d'une pièce 22a, qui peut être égal ou supérieur à un cassage d'angle, ceci bien entendu dans la limite de la puissance que peut fournir la manœuvre de cet outil à la main. C'est ainsi par exemple que, dans une pièce en acier, on peut réaliser un chanfrein atteignant une largeur d'environ 1 mm. Comme le montrent les Fig. 4 à 6, cette opération peut s'exécuter en plusieurs passes successives. Chacune de ces passes s'effectue en posant l'outil par sa pièce de guidage et de butée 4, de manière que la ligne arrière fictive 21, constituant un point théorique de butée 21, repose sur la surface extérieure de la pièce 22a qui offre la ligne 22 sur laquelle l'enlèvement de matière doit être effectué, tandis que le doigt de coupe 5 est disposé tout au début de la ligne 22, de manière que le taillant 7c fasse légèrement saillie sur l'épaisseur de la pièce 22a pour pouvoir l'attaquer lorsque le mouvement est engagé. Lorsque l'enlèvement de matière à effectuer est constitué par un chanfrein, ce dernier doit être bien entendu réalisé sur une arête délimitée par deux faces concourantes de la pièce 22a, auquel cas ce sont les plans latéraux 17 de la cavité 16 qui reposent sur chacune desdites faces.

L'importance des angles de dépouille β et de dégagement γ favorise la plongée de l'outil 5 dans la matière, mais la présence de la butée 21, relativement très rapprochée du taillant 7c, limite la valeur de cette plongée. La combinaison de l'importance des angles, de la butée et du bras de levier d2 relativement élevé, permet à l'opérateur de maîtriser l'enlèvement de matière en tirant cet outil par le manche 2 suivant la direction du chanfrein à obtenir (ligne 22). Pour l'obtention d'un tel chanfrein par passes successives, il convient, comme le montrent les Fig. 4 et 6, de relever progressivement le manche 2 d'une passe à la suivante pour obtenir un nouvel enlèvement de matière (épaisseur 23a sur la première passe de la Fig. 4, seconde épaisseur 23b pendant la seconde passe de la Fig. 5 et épaisseur finale 23c au cours de la troisième passe de la Fig. 6). Une fois effectuée cette troisième passe, l'outil se place de manière que les flancs 17 de la cavité 16 s'appuient sur toute leur longueur sur les faces latérales de la pièce, de sorte que les trois plans constitués par l'arête de coupe 7c d'une part, et ces faces 17 du bloc de l'autre coïncident avec le chanfrein déjà réalisé, réalisant ainsi une portée complète de la pièce de guidage et de butée 4 sur la pièce 22a à travailler. Il en résulte que, une fois dans cette position d'appui, l'outil ne travaille plus et qu'aucun enlèvement de matière supplémentaire n'est réalisé.

On peut réduire la profondeur des passes de réalisation du chanfrein en agissant sur la vis 11a. De même, si l'on désire ne procéder qu'à un ébavurage, on agit également au préalable pour régler la saillie de l'outil par rapport aux faces de contact à l'aide de la même vis 11a.

On notera encore que, grâce au bras de levier important obtenu à partir du point de butée 21, au fur et à mesure des passes successives effectuées, le rapport d2 à d1 se modifie favorablement, étant donné que, plus la profondeur du chanfrein augmente, plus la zone d'appui de la pièce 4 se rapproche de l'arête de coupe 7c, c'est-à-dire plus l'effet de plongée augmente et plus il est aisé d'en maîtriser la réaction.

La variante de réalisation de la Fig. 7 diffère de celle des Fig. 1 à 6 en ce que, à la différence du précédent outil qui est destiné à être manœuvré par traction, cette seconde réalisation s'utilise par poussée. A cet effet, et comme le montre la Fig. 7, le bloc 3 et la pièce de guidage et butée 4 présentent la même conception, mais se trouvent maintenus à l'aide de la vis 1 à l'extrémité même de la tige 1, alors que par contre le doigt de coupe 5 se trouve disposé, par rapport à ce bloc 3, du côté du manche 2. L'arête de coupe ou tranchant 7c présente la même disposition relative en saillie par rapport à la rainure 18, mais inversement à la réalisation précédente, la face de dépouille 7b est située du côté du manche 2 et la face de coupe à l'opposé, c'est-à-dire en regard encore de la pièce 4. Il est bien entendu toujours prévu une vis 11a de réglage de la saillie de la tête de coupe 7 et une vis d'immobilisation 8 de ce doigt de coupe. Cet outil travaille de la même manière que dans le cas de la réalisation précédente, à la seule différence que l'outil est poussé à l'aide de son manche 2 et non pas tiré.

Dans l'une et l'autre réalisations le bloc 3 et la pièce 4 présentent en regard de la tête de coupe 7 une cavité transversale cylindrique 24 constituant une chambre de dégagement dans laquelle peut s'enrouler le copeau découpé par le taillant 7c pour ensuite sortir de l'outil sur l'un ou l'autre côté.

Il est bien clair que, outre des chanfreins, il serait possible, en modifiant la forme de la cavité de guidage 16 et du tranchant 7c de l'outil, de réaliser d'autres opérations dans l'enlèvement de matière qu'un chanfreinage, telles que l'exécution d'une gorge, l'ébavurage de rainures de clavettes, l'arasage d'un joint de coulée, un limage en creux, etc. Il convient de préciser que dans la première réalisation décrite en regard des figures permettant d'obtenir un chanfrein, il est possible, en utilisant le réglage de la vis micrométrique 11a, de ne procéder qu'à un simple cassage d'angles.

## Revendications

1. Outil à main pour l'enlèvement de matière notamment sur une arête d'une pièce, du type comprenant un support d'outil (3-1) solidaire à une extrémité d'un manche de manœuvre (2) et portant à l'autre extrémité un outil proprement dit (5) offrant une arête de coupe (7c), l'outil de coupe proprement dit (5) étant fixé, par des moyens d'immobilisation (8), sur le support (3-1) de manière que son arête de coupe ou taillant (7) soit sensiblement perpendiculaire à la direction générale du support et du manche (2) qui le prolonge, et une pièce de guidage et de butée présentant une rainure de guidage de section en V, caractérisé en ce que ce support (3-1) porte en outre, à proximité de l'outil de coupe (5), la pièce de guidage et de butée de forme parallélépipédique qui est destiné à reposer sur l'arête (22) de la pièce (22a) ayant un côté disposé, face à la face de coupe (7a) de l'outil (5) et son côté opposé éloigné de ladite face constituant un point d'appui (21) sur cette pièce (22a), la ligne fictive joignant le tranchant (7c) et ce point d'appui (21) étant inclinée par rapport à la direction générale du support (3-1) et du manche (2) d'un angle α de l'ordre de 8 à 16°.

2. Outil à main selon la revendication 1, caractérisé en ce que l'angle β de dépouille de l'outil de coupe proprement dit (5) est de l'ordre de 20 à 30°.

3. Outil à main selon la revendication 2, caractérisé en ce que l'angle β est de l'ordre d'environ 25°.

4. Outil à main selon la revendication 1, caractérisé en ce que l'angle γ de dégagement de l'outil de coupe proprement dit (5) est de 15 à 25°.

5. Outil à main selon la revendication 4, caractérisé en ce que l'angle γ de dégagement de l'outil de coupe proprement dit est d'environ 20°.

6. Outil à main selon la revendication 1, caractérisé en ce que l'angle α est d'environ 12°.

7. Outil à main selon la revendication 1, caractérisé en ce que le rapport entre la distance (d2) comprise entre le point de butée arrière (21) et l'extrémité du manche (2) et la distance (d1) comprise entre le taillant (7c) de l'outil (5) et le point d'appui (21) est de l'ordre de 10 à 20.

8. Outil à main selon la revendication 7, caractérisé en ce que le rapport (d2/d1) est d'environ 12 à 15.

9. Outil à main selon l'une quelconque des revendications 1 à 8, caractérisé en ce que l'organe d'appui (4) est rapporté sur le bloc support (3) de manière interchangeable.

10. Outil à main selon l'une quelconque des revendications 1 à 9, caractérisé en ce que l'outil proprement dit (5) est réglable, à l'aide d'un organe (11a), transversalement au support (3-1).

11. Outil à main selon l'une quelconque des revendications 1 à 10, caractérisé en ce que le point d'appui (21) est disposé entre l'outil proprement dit (5) et le manche (2).

12. Outil à main selon l'une quelconque des revendications 1 à 10, caractérisé en ce que l'outil proprement dit (5) est disposé entre le point d'appui (21) et le manche (2).

13. Outil à main selon l'une quelconque des revendications 1 à 12, caractérisé en ce que le support présente du côté du point d'appui (21) une cavité de dégagement de copeaux (24) disposée en regard de l'outil proprement dit (5).

14. Outil à main selon la revendication 13, caractérisé en ce qu'une rainure de dégagement (18) est ménagée dans la pièce de guidage et de butée (4).

15. Outil à main selon l'une quelconque des revendications 1 à 14, caractérisé en ce que le support (3-1) comprend une tige (1) sur laquelle est engagé, de manière amovible, un bloc de support (3) qui porte l'outil proprement dit et la pièce de guidage et de butée (4).

**Claims**

1. Hand tool for removing material, particularly from the edge of a workpiece, of a type which consists of a tool mount (3-1) which is rigidly attached at one end to an operating handle (2) and which has at the other end a tool proper (5) with a cutting edge (7c), the actual cutting tool being fixed, by means which render it immovable (8), to the mount (3-1), so that its cutting edge or blade (7) is substantially perpendicular to the general direction of the mount, and to the handle (2) which extends it, and a guiding and bearing member with a guidance groove having a V-shaped section, characterised in that this mount (3-1) also has, near the cutting tool (5), the guiding and bearing member in the shape of a parallelepiped, which is intended to rest on the edge (22) of the part (22a), with one side opposite the cutting face (7a) of the tool (5), and the opposite remote face of the said surface forming a fulcrum (21) on the part (22a), the imaginary line joining the blade (7a) and this fulcrum (21) being inclined, in relation to the general direction of the mount (3-1) and of the handle (2), at an angle α which is of the order of 8 to 16°.

2. Hand tool according to claim 1, characterised in that the draft angle β of the actual cutting tool (5) is of the order of 20 to 30°.

3. Hand tool according to claim 2, characterised in that the draft angle β is of the order of approximately 25°.

4. Hand tool according to claim 1, characterised in that the back-off angle γ of the actual cutting tool (5) is from 15 to 25°.

5. Hand tool according to claim 4, characterised in that the back-off angle of the actual cutting tool is approximately 20°.

6. Hand tool according to claim 1, characterised in that the angle α is approximately 12°.

7. Hand tool according to claim 1, characterised in that the ratio between the distance (d2) defined between the rear fulcrum (21) and the end of the handle (2), and the distance (d1) defined between the blade (7c) of the tool (5) and the fulcrum (21), is of the order of 10 to 20.

8. Hand tool according to claim 7, characterised in that the ratio (d2/d1) is approximately 12 to 15.

9. Hand tool according to any of claims 1 to 8, characterised in that the bearing member (4) is applied to the supporting block (3) in an interchangeable manner.

10. Hand tool according to any of claims 1 to 9, characterised in that the tool proper (5) is adjustable transversely across the mount (3-1) by means of a device (11a).

11. Hand tool according to any of claims 1 to 10, characterised in that the fulcrum (21) is situated between the tool proper (5) and the handle (2).

12. Hand tool according to any of claims 1 to 10, characterised in that the tool proper (5) is situated between the fulcrum (21) and the handle (2).

13. Hand tool according to any of claims 1 to 12, characterised in that the mount has, on the side of the fulcrum (21), a cavity for the removal of swarf (24), arranged opposite the tool proper (5).

14. Hand tool according to claim 13, characterised in that a clearance groove (18) is machined into the guiding and bearing member (4).

15. Hand tool according to any of claims 1 to 14, characterised in that the mount (3-1) incorporates a rod (1) on which is fixed, in a detachable manner, a supporting block (3) which holds the tool proper, and the guiding and bearing member (4).

**Patentansprüche**

1. Handwerkzeug für die Materialabhebung insbesondere an Kanten eines Werkstückes, mit einer Werkzeug-Halterung (3-1), die mit einem Ende an einem Handgriff (2) befestigt ist und an ihrem anderen Ende ein Schneidwerkzeug (5) mit einer Schneide (7c) trägt, wobei das Schneidwerkzeug (5) mit Befestigungsmitteln (7) an der Halterung (3-1) derart befestigt ist, dass die Schneide oder Klinge (7) im wesentlichen senkrecht zur Hauptrichtung der Halterung und des diese Richtung verlängernden Griffes (2) verläuft, mit einem Anschlag- und Führungsteil, mit einer V-förmigen Führungsnut, dadurch gekennzeichnet, dass die Halterung (3-1) des Schneidwerkzeugs (5) benachbart das Anschlag- und Führungsteil mit der Form eines Parallelepipeds enthält, welches auf der Kante (22) des Werkstücks (22a) ruhen kann und welches eine der Schneidfläche (7a) des Schneidwerkzeugs (5) benachbarte Seite und eine von der Schneidfläche abgewandte Seite besitzt, die einen Abstützpunkt (21) zur Auflage auf dem Werkstück (22a) bildet, und dass die fiktive Linie, welche die Schneide (7c) und den Abstützpunkt (21) verbindet, gegenüber der Hauptrichtung der Halterung (3-1) und des Griffes (2) um einen Winkel $\alpha$ in der Grössenordnung von 8 bis 16° geneigt ist.

2. Handwerkzeug nach Anspruch 1, dadurch gekennzeichnet, dass der Freiwinkel $\beta$ des Schneidwerkzeugs (5) in der Grössenordnung von 20 bis 30° liegt.

3. Handwerkzeug nach Anspruch 2, dadurch gekennzeichnet, dass der Freiwinkel $\beta$ etwa 55° beträgt.

4. Handwerkzeug nach Anspruch 1, dadurch gekennzeichnet, dass der Spanwinkel $\gamma$ des Schneidwerkzeugs (5) zwischen 15 und 25° beträgt.

5. Handwerkzeug nach Anspruch 4, dadurch gekennzeichnet, dass der Spanwinkel $\gamma$ des Schneidwerkzeugs etwa 20° beträgt.

6. Handwerkzeug nach Anspruch 1, dadurch gekennzeichnet, dass der Winkel $\alpha$ etwa 12° beträgt.

7. Handwerkzeug nach Anspruch 1, dadurch gekennzeichnet, dass das Verhältnis der vom hinteren Abstützpunkt (21) bis zum Ende des Griffes (2) reichenden Strecke (d2) zu der von der Schneide (7c) des Schneidwerkzeugs (5) bis zum Abstützpunkt (21) reichenden Strecke (d1) in der Grössenordnung von 10 bis 20 liegt.

8. Handwerkzeug nach Anspruch 7, dadurch gekennzeichnet, dass das Verhältnis (d2/d1) etwa 12 bis 15 beträgt.

9. Handwerkzeug nach einem der Ansprüche 1 bis 8, dadurch gekennzeichnet, dass das Stützteil (4) austauschbar an der Halterung (3) befestigbar ist.

10. Handwerkzeug nach einem der Ansprüche 1 bis 9, dadurch gekennzeichnet, dass das Schneidwerkzeug (5) quer zur Halterung (3-1) mittels eines Organs (11a) verstellbar ist.

11. Handwerkzeug nach einem der Ansprüche 1 bis 10, dadurch gekennzeichnet, dass der Abstützpunkt (21) zwischen dem Schneidwerkzeug (5) und dem Handgriff (2) liegt.

12. Handwerkzeug nach einem der Ansprüche 1 bis 10, dadurch gekennzeichnet, dass das Schneidwerkzeug (5) zwischen dem Abstützpunkt (21) und dem Handgriff (2) angeordnet ist.

13. Handwerkzeug nach einem der Ansprüche 1 bis 12, dadurch gekennzeichnet, dass die Halterung zur Seite des Abstützpunktes (21) hin einen Span-Freistich (24) dem Schneidwerkzeug (5) gegenüberliegend aufweist.

14. Handwerkzeug nach Anspruch 13, dadurch gekennzeichnet, dass eine Freinut (18) in dem Anschlag und Führungsteil (4) vorgesehen ist.

15. Handwerkzeug nach einem der Ansprüche 1 bis 14, dadurch gekennzeichnet, dass die Halterung (3-1) einen Schaft (1) enthält, an dem lösbar ein Halterungsblock (3) befestigt ist, der das Schneidwerkzeug (5) und das Anschlag- und Führungsteil (4) trägt.

FIG.1

1

2

X

3

X

5

7c

d₁

4  21

22

22a

d₂

0 077 226

FIG.3

P

1

19b

14

13

19

16

3

19a

15

4

19

18

17

P

γ

11  11a  10

3

20  20a

FIG.2

1

X

5

8a

8

X

24

6

7

7b

7c

16a  7a

α

β

x'

x'

9

12

4

18

19a  17

3

FIG.4

FIG.5

FIG.6

FIG.7

0 077 226